# EUROPEAN PATENT APPLICATION

(11) **EP 4 191 131 A1**
(43) Date of publication of application: **07.06.2023**
(21) Application number: 21739899.9
(22) Date of filing: 21.04.2021
(51) Int. Cl.: F21V 23/00, F21V 5/04, G02B 3/00, F21V 23/04, G09F 9/30, F21Y 115/10

(54) **LIGHTING DEVICE PROVIDING LIGHT SIMILAR TO NATURAL LIGHT**

(30) Priority: 27.07.2020 KR 20200093066
(71) Applicant: Sunnyfive Co., Ltd., Seoul 06372 (KR)
(72) Inventor: KIM, Min Jun, Seongnam-si, Gyeonggi-do 13644 (KR); CHO, Tae Sik, Siheung-si, Gyeonggi-do 14988 (KR); HAN, Jeong Ho, Yongin-si, Gyeonggi-do 17082 (KR); KIM, Myung Kyum, Seoul 06737 (KR); PARK, Soo Yeon, Suwon-si, Gyeonggi-do 16708 (KR)
(74) Representative: Appleyard Lees IP LLP
(86) International application number: PCT/KR2021/004976
(87) International publication number: WO 2022/025392

(57) **Abstract**

A lighting device may include a plurality of LED light sources, a plurality of lens parts respectively disposed on front surfaces of the plurality of LED light sources to collect and irradiate light emitted from each of the plurality of LED light sources, and a controller for controlling operations of the plurality of LED light sources. The plurality of LED light sources may include visible-light LEDs and at least one ultraviolet LED. Each of the plurality of lens parts may include a condensing lens disposed on the front surface of each of the plurality of LED light sources to decrease a divergence angle of light emitted from each of the plurality of LED light sources and a fly eye lens part disposed on a front surface of the condensing lens to stack the light on a light receiving surface so that a light quantity at the light receiving surface has a uniform distribution.

## Description

### TECHNICAL FIELD

The present invention relates to a lighting device for providing light similar to natural light, and more particularly, to a lighting device for providing light similar to natural light in a sensory manner to a user and preserving an advantage of the natural light.

### BACKGROUND ART

Since receiving natural light (or solar light) causes an effect of physical and mental health promotion of a human, the human is required to be exposed to the natural light more than a predetermined time. However, growing population density makes a poor living environment and increases an indoor working time, and modem people hardly afford to receive natural light. Particularly, since a virus such as COVID-19 is going around, outdoor activities of people show a trend of further decreasing. Thus, modem people experiences lack of vitamin D and serotonin an occurrence frequency of all sorts of physical and mental diseases such as osteoporosis or depression

An artificial lighting may not provide an advantage of the natural light to a user in that the artificial lighting does not have health effects such as vitamin D synthesis because ultraviolet light is not emitted therefrom and is not good for eye health due to blue peak in a wavelength thereof. Also, the artificial lighting shows a difference from the natural light in a sensory manner in that the artificial lighting has a low color rendering index (CRI) and a low light straightness.

### DISCLOSURE OF THE INVENTION

### TECHNICAL PROBLEM

The present invention may provide a lighting device for providing light similar to natural light to a user and preserving an advantage of the natural light.

The technical objective of the present invention is not limited to the aforementioned technical problem, and other technical objectives may be inferred from embodiments below.

### TECHNICAL SOLUTION

A lighting device for providing light similar to natural light includes: a plurality of LED light sources; a plurality of lens parts respectively disposed on front surfaces of the plurality of LED light sources to collect and irradiate light emitted from each of the plurality of LED light sources; and a controller 1600 for controlling an intensity or an on/off state of at least one of the plurality of LED light sources, the plurality of LED light sources include visible-light LEDs, at least one ultraviolet LED, and at least one infrared LED, the visible-light LEDs include at least one of a white LED, a red LED, a green LED, and a blue LED, each of the plurality of lens parts includes: a condensing lens disposed on the front surface of each of the plurality of LED light sources to decrease a divergence angle of light emitted from each of the plurality of LED light sources; and a fly eye lens part disposed on a front surface of the condensing lens to stack the light on a light receiving surface so that a light quantity at the light receiving surface has a uniform distribution, the controller controls an intensity or an on/off state of at least one of the plurality of LED light sources so that a sum of an intensity of light emitted from the plurality of LED light sources is greater than a reference illuminance value, or the light emitted from the plurality of LED light sources has a reference color temperature, and the condensing lens is designed so that an emission surface from which the light is emitted has a surface area greater than that of an incidence surface to which the light emitted from each of the plurality of LED light sources is incident.

### ADVANTAGEOUS EFFECTS

The lighting device may providing the light similar to the natural light in order to provide experience as if the user in the closed indoor space, in which the natural light is hardly received, receives the natural light. Also, the lighting device may provide the advantage obtained when the user receives the natural light by inducing the vitamin D synthesis in the body of the user in the indoor space and producing the serotonin that is the neurotransmitter.

### BRIEF DESCRIPTION OF THE DRAWINGS

FIG. 1 is a view illustrating a lighting device according to an embodiment.
FIG. 2 is a block-diagram of the lighting device according to an embodiment.
FIG. 3a is a view illustrating a spectrum of natural light according to an embodiment.
FIG. 3b is a view illustrating a spectrum of light emitted from a white LED according to an embodiment.
FIG. 3c is a view illustrating a spectrum of light generated by combining a white LED, a red LED, a green LED, or a blue LED according to an embodiment.
FIG. 4 is a view illustrating a color temperature change according to a daily cycle of the sun from sunrise to sunset according to an embodiment.
FIG. 5 is a view illustrating a configuration of a lens part according to an embodiment.
FIG. 6a is a view illustrating a general rod lens.
FIG. 6b is a view illustrating a rod lens used in the lighting device according to an embodiment.
FIG. 7a is a view illustrating a function of a fly eye lens part according to an embodiment.
FIG. 7b is a view illustrating a structure of the fly eye lens part according to an embodiment.
FIG. 8 is a block-diagram of the lighting device according to an embodiment.
FIG. 9 is a view illustrating a state in which a light emission direction of the lighting device is changed as time elapses according to an embodiment.

### BEST MODE FOR CARRYING OUT THE INVENTION

A lighting device for providing light similar to natural light includes: a plurality of LED light sources; a plurality of lens parts respectively disposed on front surfaces of the plurality of LED light sources to collect and irradiate light emitted from each of the plurality of LED light sources; and a controller 1600 for controlling an intensity or an on/off state of at least one of the plurality of LED light sources, the plurality of LED light sources include visible-light LEDs, at least one ultraviolet LED, and at least one infrared LED, the visible-light LEDs include at least one of a white LED, a red LED, a green LED, and a blue LED, each of the plurality of lens parts includes: a condensing lens disposed on the front surface of each of the plurality of LED light sources to decrease a divergence angle of light emitted from each of the plurality of LED light sources; and a fly eye lens part disposed on a front surface of the condensing lens to stack the light on a light receiving surface so that a light quantity at the light receiving surface has a uniform distribution, the controller controls an intensity or an on/off state of at least one of the plurality of LED light sources so that a sum of an intensity of light emitted from the plurality of LED light sources is greater than a reference illuminance value, or the light emitted from the plurality of LED light sources has a reference color temperature, and the condensing lens is designed so that an emission surface from which the light is emitted has a surface area greater than that of an incidence surface to which the light emitted from each of the plurality of LED light sources is incident.

The lighting device may have a shape of a window installable to a wall, and the light may be emitted from an upper portion of an edge area or a bezel area of the window.

The fly eye lens part may have a structure in which a first fly eye lens, a second fly eye lens, a third fly eye lens, and a fourth fly eye lens are sequentially stacked with each other, the second fly eye lens may be obtained by rotating the first fly eye lens by 90° in a direction of a first axis, the third fly eye lens may be obtained by rotating the first fly eye lens by 180° in a direction of a second axis, the fourth fly eye lens may be obtained by rotating the second fly eye lens by 180° in the direction of the second axis, and the first axis and the second axis may be perpendicular to each other.

The lighting device may further include a motor configured to control a light emission direction of the plurality of LED light sources, the controller may control the motor to set the light emission direction as a reference direction, and the reference direction may be determined based on current time or determined by a user.

The lighting device may further include an illuminance sensor configured to sense surrounding illuminance, and the reference illuminance value may be determined based on surrounding illuminance sensed through the illuminance sensor.

The lighting device may further include a communication unit configured to receive a control signal from the outside, the controller may control an intensity or an on/off state of at least one of the plurality of LED light sources under the control signal, and the control signal may include the reference illuminance value, a light emission direction, a reference color temperature, current weather, current time, or an intensity or an on/off state of ultraviolet light.

The controller may control an intensity or an on/off state of the at least one infrared LED based on information on an intensity or an on/off state of infrared light received from the outside.

A lighting device for providing light similar to natural light includes: a light emitting unit including a plurality of LED light sources and a plurality of lens parts disposed on front surfaces of the plurality of LED light sources to collect and irradiate light emitted from each of the plurality of LED light sources; a controller configured to control an operation of the light emitting unit; a communication unit configured to receive a control signal for controlling the controller; a display configured to display external scenery or a user-desired image; an illuminance sensor configured to sense surrounding illuminance; and a motor configured to control a light emission direction of the light emitting unit, the plurality of LED light sources include visible-light LEDs, at least one ultraviolet LED, and at least one infrared LED, the visible-light LEDs include at least one of a white LED, a red LED, a green LED, and a blue LED, each of the plurality of lens parts includes: a condensing lens disposed on the front surface of each of the plurality of LED light sources to decrease a divergence angle of light emitted from each of the plurality of LED light sources; and a fly eye lens part disposed on a front surface of the condensing lens to stack the light on a light receiving surface so that a light quantity at the light receiving surface has a uniform distribution, the controller controls an intensity or an on/off state of at least one of the plurality of LED light sources so that a sum of an intensity of light emitted from the plurality of LED light sources is greater than a reference illuminance value, the controller controls the motor to set the light emission direction as a reference direction, the reference direction is determined based on current time or determined by a user, and the reference illuminance value is determined based on surrounding illuminance sensed through the illuminance sensor.

The condensing lens may be a rod lens in which an incidence surface to which the light emitted from each of the plurality of LED light sources is incident has a surface area less than that of an emission surface from which the light is emitted, and the fly eye lens part may have a structure in which a plurality of fly eye lenses are stacked with each other.

### MODE FOR CARRYING OUT THE INVENTION

Hereinafter, embodiments will be clearly and specifically described with reference to the accompanying drawings so that those with ordinary skill in the technical field (hereinafter, referred to as a person skilled in the art) to which the present invention pertains easily carry out the present invention.

It will be understood that although the terms of first and second are used herein to describe various elements, these elements should not be limited by these terms. Terms are only used to distinguish one component from other components.

In this disclosure, a term "module" or " part" may perform at least one function or operation and be realized as hardware, software, or a combination thereof. Also, a plurality of "modules" or a plurality of "parts" may be integrated into at least one module to realize at least one process except for a "module" or a "part" which is necessary to be realized into specific hardware.

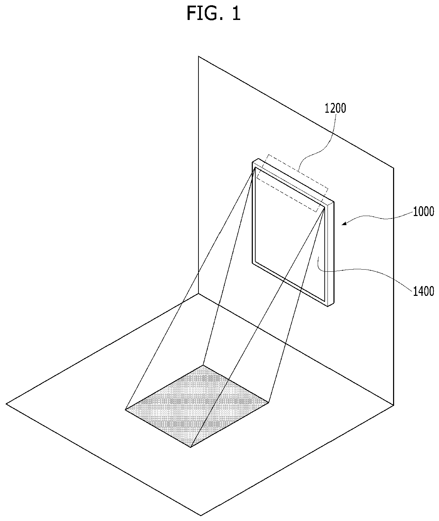

FIG. 1 is a view illustrating a lighting device according to an embodiment.

A lighting device 1000, as a device for providing light similar to natural light, may provide an experience in which sunlight substantially comes through a window to a user who is in a closed indoor space. According to an embodiment, the lighting device 1000 may be installed on a wall and have a window shape.

Light emitted from the lighting device 1000 may have a spectrum similar to that of the natural light. Visible light emitted from the lighting device 1000 may have a high color rendering index (CRI). The light emitted from the lighting device 1000 may have a color temperature similar to that of the natural light. For example, the lighting device 1000 may emit bright and clear light of the morning (color temperature of 4000k) to warm and yellow light of a late afternoon (2700k).

The natural light may induce vitamin D synthesis in a body as well as production and activation of various hormones and neurotransmitters. Particularly, secretion of serotonin called as a happy hormone increases at day-time allowing the natural light to receive and decreases at night-time. When the serotonin is not property secreted, an excessive stimulant action of norepinephrine and dopamine may not be suppressed when exposed to a stress to easily cause annoyance and anger. The serotonin may be secreted when light having an intensity equal to or greater than a reference intensity is sensed through retinas of a person. The lighting device 1000 may emit the light having the intensity equal to or greater than the reference intensity to induce serotonin synthesis in a body of a user disposed at an indoor space at which the natural light hardly arrives.

The light emitted from the lighting device 1000 may have a straightness. As the light emitted from the lighting device 1000 moves straight, a feeling such that light arrives from the sun spaced far may be provided to a user. To this end, the lighting device 100 may include a condensing unit for condensing and irradiating light. For example, the condensing unit may include a lens that is a component for preventing light emitted from the light source from being diffused. Since the light emitted from the lighting device 1000 has the straightness, a feeling of receiving direct light incident through a real window may be provided to the user.

The lighting device 1000 may provide various advantages of the natural light to the user. The lighting device 1000 may emit light in a visible light region, an ultraviolet light region, and an infrared light region.

The ultraviolet light may be divided into UVA (320 nm to 400 nm), UVB (290 nm to 320 nm), and UVC (200 nm to 290 nm). The UVB has an effect such as negative ion generation, vitamin D synthesis, and sunbath, and the UVC has an effect such as a sterilizing action and a deodorizing action.

The lighting device 1000 may emit infrared light. The infrared light may have a health promotion effect such as strengthening a human immune function and quick wound healing, and a person may feel warmness from the infrared light.

The lighting device 1000 may selectively emit the ultraviolet light and the infrared light while emitting the visible light. For example, the lighting device 1000 may not emit the ultraviolet light and the infrared light while emitting the visible light. For example, the lighting device 1000 may not emit the infrared light while emitting the visible light and the ultraviolet light. For example, the lighting device 1000 may not emit at least one of the ultraviolet light and the infrared light or an emission intensity according to an external environment factor or selection of the user. The lighting device 1000 may emit only the UVB of the ultraviolet light.

The lighting device 1000 may be installed in an indoor space and realized in a widow shape that is installable to a wall. The lighting device 1000 may be configured to emit light from an upper portion 1200 of an edge area or a bezel area of the window.

The lighting device 1000 may display outdoor scenery or a user-desired content or image through a display 1400. For example, the lighting device 1000 may display a natural image such as a sky image or a forest image, scenery of a current position, or a user-desired specific image. Thus, the user may receive a further fresh feeling as if a real window is installed.

Hereinafter, a configuration and operation of the lighting device 1000 will be described in detail with reference to the accompanying drawings.

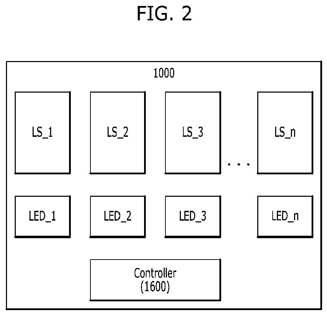

FIG. 2 is a block-diagram of the lighting device according to an embodiment.

Referring to FIG. 2, the lighting device 1000 may include LED light sources LED_1 to n, lens parts LS_1 to n, and a controller 1600.

The LED light sources LED_1 to n may include LEDs (hereinafter, referred to as visible-light LEDs) for emitting light in a visible light region, at least one LED (hereinafter, referred to as an ultraviolet LED) for emitting light in an ultraviolet region, and at least one LED (hereinafter, referred to as an infrared LED) for emitting light in an infrared region. The LED light sources LED_1 to n may include the visible-light LEDs and may selectively include the ultraviolet LED and the infrared LED. For example, the LED light sources LED_1 to n may include the visible-light LEDs and at least one ultraviolet LED. Alternatively, the LED light sources LED_1 to n may include the visible-light LEDs, at least one ultraviolet LED, and at least one infrared LED. In this embodiment, although the light source for generating light is the LED as an example, the LED may be replaced by another kind of a light emitting device.

The LED light sources LED_1 to n may include at least one visible-light LED for emitting light in the visible light region. The visible light may be in a wavelength of about 380 nm to about 750 nm, which is sensible by human eyes. The visible-light LED may include a white LED, a red LED, a green LED, or a blue LED. The white LED may include a cool white LED and a warm white LED. For example, the cool white LED may have a color temperature of 5000K, and the warm white LED may have a color temperature of 2700K.

The lighting device 1000 may adjust an intensity of an on/off state of at least one of the LED light sources LED_1 to n so that light emitted from the LED light sources LED_1 to n has a spectrum similar to that of the natural light. For example, the intensity of the on/off state of the white LED, the red LED, the green LED, or the blue LED may be adjusted so that the light emitted from the LED light sources LED_1 to n has a spectrum distribution continuously changed in a wavelength range (e.g., 400 nm to 700 nm) of the visible light.

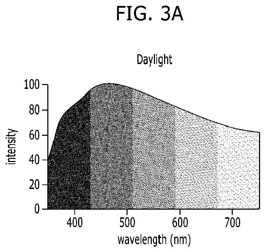

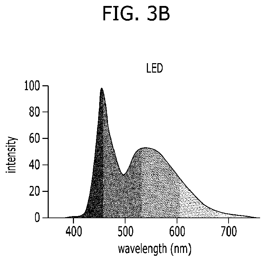

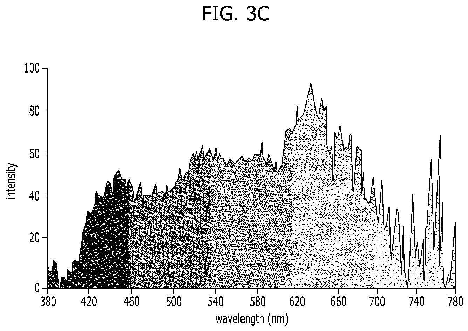

FIGS. 3a and 3b illustrate spectra of the natural light and the white LED, respectively. Referring to FIGS. 3a and 3b, the spectrum of the white LED shows a blue peak phenomenon and is not similar to the overall spectrum of the natural light. Thus, as the white LED, the red LED, the green LED, or the blue LED are combined at a predetermined ratio, a spectrum substantially similar to the natural light may be made. For example, the white LED, the red LED, the green LED, or the blue LED may be combined at a ratio of 6:3:2: 1. FIG. 3c is a view illustrating a spectrum of light generated by combining the white LED, the red LED, the green LED, or the blue LED according to an embodiment.

According to an embodiment, the lighting device 1000 may emit light having a high color gamut ratio by including a plurality of white LEDs each having a high color rendering index (CRT). The CRI is an index of how a specific light source shows a color of an object similarly to reference light. For example, when the CRI of the sun is 100, as the CRI of the specific light source is close to 100, a color of an object shown by the specific light source may be similar to a color of the object shown by the sun.

The lighting device 1000 may set more than a reference ratio of the visible-light LEDs as the white LEDs so that the light emitted therefrom has a high color gamut ratio. Since light emitted from each of the LED light sources LED_1 to n may have the same intensity or different intensities, the reference ratio may be determined in consideration of the intensity of the light emitted from each of the LED light sources LED_1 to n. That is, the number of the white LEDs may be determined so that an intensity of light emitted from the white LEDs of the entire intensity of light emitted from the lighting device 1000 is equal to or greater than the reference ratio.

The lighting device 1000 may emit light having an intensity equal to or greater than a reference illuminance value to stimulate a neuron and induce serotonin production. The lighting device 1000 may control the LED light sources LED_1 to n so that a sum of intensities of the light emitted from the LED light sources LED_1 to n is greater than the reference illuminance value. The reference illuminance value may be determined based on a minimum intensity of light necessary for a person to produce the serotonin. For example, the sum of the light emitted from the LED light sources LED_1 to n may be controlled to have illuminance equal to or greater than 3000 lx at a position spaced by 1 m from the LED light sources LED_1 to n. The reference illuminance value may be changed according to a setting of a user, a manufacturing purpose of a manufacturing company, and surrounding illuminance.

According to an embodiment, the LED light sources LED_1 to n may include at least one ultraviolet LED for emitting the light in the ultraviolet region. According to an embodiment, the lighting device 1000 may emit light having a wavelength in the UVB region by using at least one ultraviolet LED so as to induce vitamin D synthesis in the body of the user. As the lighting device 1000 emits the light in the UVB region, vitamin D may be synthesized in the body of the user, and diseases caused by vitamin D deficiency such as rickets, osteomalacia, and dizziness may be prevented.

The LED light sources LED_1 to n may include at least one infrared LED for emitting the light in the infrared region. The infrared light, which has a wavelength of about 700 nm to 1 mm, has an effect of transferring heat into human epidermis, helping blood circulation, regenerating a cell, and promoting an immunity. The user may feel warmness of the natural light by the infrared light emitted from the lighting device 1000 and also experience various effects of health promotion.

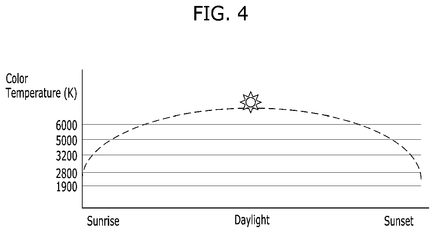

The lighting device 1000 may emit light having a reference color temperature. The lighting device 1000 may adjust the intensity or the on/off state of at least one of the LED light sources LED_1 to n so that the light emitted from the lighting device 1000 has the reference color temperature. The reference color temperature may be determined according to current time, current weather, or a current position or directly determined by the user. For example, the natural light may have a color temperature of 2000K at sunrise, a color temperature of 2500K at sunset, a color temperature of 5500K at noon on a sunny day, and a color temperature of 6500K to 6800K on a cloudy day. The reference color temperature may be automatically changed according to color temperature change (refer to FIG. 4) based on a daily cycle of the sun from sunrise to sunset. The lighting device 1000 may adjust the intensity or the on/off state of at least one of the LED light sources LED_1 to n by reflecting the color temperature change according to time flow. As a user positioned at an indoor space receives light having a color temperature corresponding to current time, weather, and season, the user may recognize outdoor weather and receive a feeling in which a real window is installed.

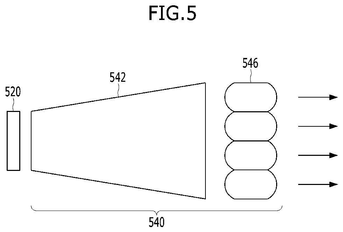

Referring to FIG. 2 again, the lighting device 1000 may include the lens parts LS_1 to n respectively disposed on front surfaces of the LED light sources LED_1 to n to secure straightness of the emitted light and condensing and irradiating the light emitted from the LED light sources LED_1 to n. A first lens part LS_1 may be disposed on a front surface of a first LED LED_1, and a n-th lens part LS_n may be disposed on a front surface of a n-th LED LED_n. Hereinafter, a configuration and function of the lens part will be described with reference to FIGS. 5 to 7b.

FIG. 5 is a view illustrating a configuration of the lens part according to an embodiment.

Referring to FIG. 5, a lens part 540 may be disposed on a front surface of a LED light source 520 to condense and irradiate light emitted from the LED light source 520, thereby securing the straightness of the emitted light. Since the LED light source 520 has an extremely great divergence angle of light, the divergence angle of the light is necessary to decrease, and uniformity of a light quantity is necessary to be secured in order to secure the straightness of the light.

The lens part 540 may include a condensing lens 542 and a fly eye lens part 546.

The condensing lens 542 may be disposed on the front surface of the LED light source 520 and reduce the divergence angle of the light emitted from the LED light source 520. According to an embodiment, although the condensing lens may be a rod lens, the embodiment of the present invention is not limited thereto. The condensing lens may include a different kind of lens, i.e., a total internal reflection (TIR) lens, for condensing the light emitted from the LED light source 520 to reduce the divergence angle of the light. The TIR lens has a reflector structure that is a simple structure for light path reflection and has an advantage in space use.

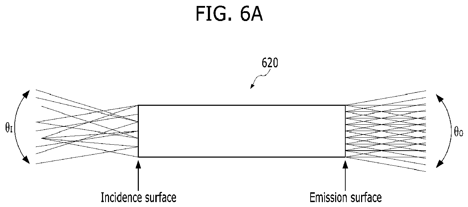

FIG. 6a illustrates a general rod lens. A general rod lens 620 has a function of mixing light emitted from the light source and having ununiform areas and angles therein, making the light to be uniform, and then emitting the uniform light. In general, the rod lens 620 is designed to have a rectangular shape and has an inner surface made of a material by which light is reflected and condensed. Light reflected inside the rod lens 620 may have uniform illuminance and distribution over an entire emission surface when the light is emitted from the emission surface. A divergence angle θO of the light at the emission surface is the same as an incident angle θI of the light at an incidence surface.

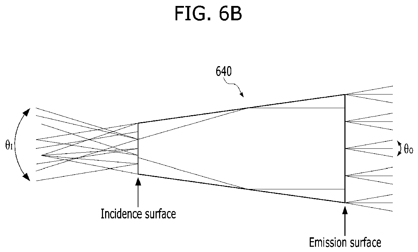

FIG. 6b is a view illustrating a rod lens used in the lighting device according to an embodiment. A rod lens 640 may be designed such that an emission surface from which light is emitted is greater than an incidence surface to which the light emitted from the LED light source 520 is incident, unlike the rod lens 620 of FIG. 6a. Thus, the rod lens 640 may have an inclined side surface. In this embodiment, as the light is totally reflected by the inclined surface in the rod lens 640, the divergence angle Θ O of the light may further decrease than the incident angle θI. As an area of the emission surface increases further than an area of the incidence surface, the divergence angle θO of the light may further greatly decrease. According to an embodiment, the area of the emission surface may be four times of the area of the incidence surface, and light having the incident angle θI of 60° may be emitted with the divergence angle θO of 15°.

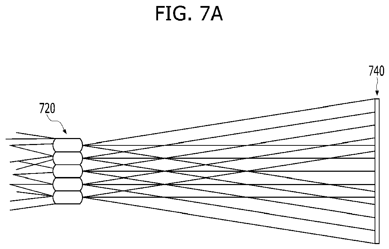

Referring to FIG. 5 again, the fly eye lens part 546 may be disposed on a front surface of the condensing lens 542 to stack the light on a light receiving surface so that the light receiving surface has a uniform light quantity distribution. Referring to FIG. 7a, a fly eye lens part 720 may stack light incident to each lens cell on a light receiving surface 740 to increase uniformity of a light quantity arrived at the light receiving surface 740. For example, it may be assumed that the light receiving surface 740 has an area of 1 m x 1 m and is spaced by 2.3 m from the fly eye lens part 720.

Since a usable incident angle of the fly eye lens part 720 is restricted according to design of the fly eye lens part 720, the incident angle of the light incident to the fly eye lens part 720 is necessarily as small as possible. Thus, the fly eye lens part 720 may have improved efficiency by reducing the divergence angle of the light through the condensing lens 542.

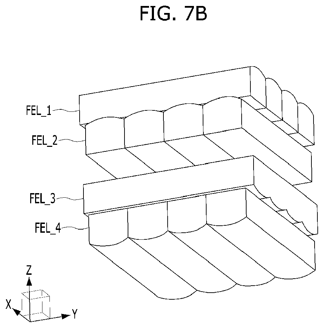

Referring to FIG. 7b, a fly eye lens part 546 may have a structure in which a plurality of fly eye lenses FEL_1 to 4 are stacked with each other. According to an embodiment, each of the fly eye lenses FEL_1 to 4 is a cylinder-type fly eye lens.

According to an embodiment, the fly eye lens part 546 may have a structure in which four fly eye lenses (a first fly eye lens FEL_1, a second fly eye lens FEL_2, a third fly eye lens FEL_3, and a fourth fly eye lens FEL_4) are sequentially stacked with each other.

The second fly eye lens FEL_2 may be obtained by rotating the first fly eye lens FEL_1 by 90° in a direction of a first axis. The third fly eye lens FEL_3 may be obtained by rotating the first fly eye lens FEL_1 by 180° in a direction of a second axis. The fourth fly eye lens FEL_4 may be obtained by rotating the second fly eye lens FEL_2 by 180° in the direction of the second axis. The first axis and the second axis are perpendicular to each other. For example, the first axis and the second axis may be the z-axis and the y-axis of a rectangular coordinate system, respectively.

Referring to FIG. 7b, although the fly eye lens part 546 has a structure in which four fly eye lenses are stacked with each other according to an embodiment, the embodiment of the present invention is not limited to the shape of the fly eye lens part 546. The fly eye lens part 546 may include the different number of fly eye lenses instead of four fly eye lenses or include only one fly eye lens.

Each of the condensing lens and the fly eye lens may be made of silicon instead of quartz (SiO2). The silicon may be useful in a water-existing environment such as a shower room or a fishbowl because of a waterproof property thereof.

Referring to FIG. 2 again, the controller 1600 may control an overall operation of the lighting device 1000. The controller 1600 may control an operation of the LED light sources LED_1 to n. The controller 1600 may include a central processing unit, a microprocessor, a digital signal processor (DSP), or a micro controller unit (MCU). The controller 1600 may include at least one processor.

The controller 1600 may control the LED light sources LED_1 to n to emit the light having the intensity equal to or greater than the reference illuminance value. The controller 1600 according to an embodiment may control the intensity or the on/off state of at least one of the LED light sources LED_1 to n so that the sum of the intensities of the light emitted from the LED light sources LED_1 to n is greater than the reference illuminance value. For example, the controller 1600 may control the intensity or the on/off state of at least one of the LED light sources LED_1 to n so that the sum of the intensities of the light emitted from the LED light sources LED_1 to n is equal to or greater than 3000 lx.

The controller 1600 may control the intensity or the on/off state of at least one of the LED light sources LED_1 to n so that the light emitted from the LED light sources LED_1 to n has the reference color temperature. The reference color temperature may be determined according to current time, current weather, a current position, or a current season or directly determined by the user.

The controller 1600 may control the on/off state of the LED light sources LED_1 to n by turning-on or turning-off a power of each of the LED light sources LED_1 to n. The controller 1600 may control the intensity of each of the LED light sources LED_1 to n by adjusting a magnitude of a voltage applied to each of the LED light sources LED_1 to n.

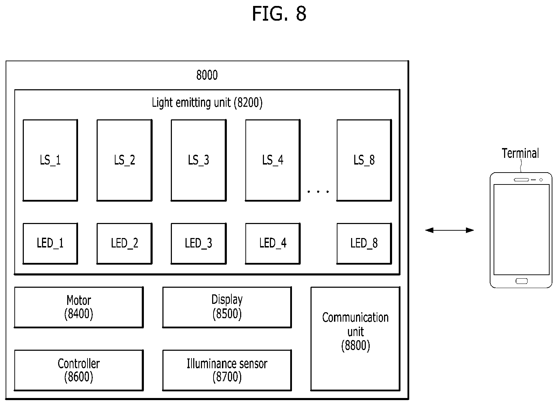

The controller 1600 may control an emission direction of the light emitted from the LED light sources LED_1 to n. This will be described in detail later with reference to FIGS. 8 to 9.

FIG. 8 is a block-diagram of the lighting device according to an embodiment.

A lighting device 8000 of FIG. 8 represents a specific embodiment of the lighting device 1000 described in FIGS. 1 to 2. Thus, the above-described features related to the lighting device 1000 of FIGS. 1 and 2 may be applied to the lighting device 8000 of FIG. 8 although the features are not described below.

Referring to FIG. 8, the lighting device 8000 may include a light emitting unit 8200, a motor 8400 for controlling movement of the light emitting unit 8200, a display 8500 for displaying an image or a content, a controller 8600 for controlling operation of the light emitting unit 8200, the motor 8400, or the display 8500, an illuminance sensor 8700 for sensing surrounding illuminance, and a communication unit 8800 for external communication.

The light emitting unit 8200 may include LED light sources LED_1 to 8 and lens parts LS_1 to 8 respectively disposed on front surfaces of the light sources LED_1 to 8 to strengthen or secure straightness of light emitted from the light sources LED_1 to 8.

The LED light sources LED_1 to 8 may include eight LEDs LED_1, LED_2, LED_3, LED_4, LED_5, LED_6, LED_7, and LED_8. The eight LEDs may include a visible-light LED, an ultraviolet LED, or an infrared LED. The eight LEDs may always include the visible-light LED and may selectively include the ultraviolet LED and the infrared LED. The eight LEDs may always include the visible-light LED and may selectively include the ultraviolet LED and the infrared LED. For example, six LEDs LED_1 to 6 from a first LED to a sixth LED may be the visible-light LEDs, a seventh LED LED_7 may be the ultraviolet LED, and an eighth LED LED_8 may be the infrared LED.

The lens parts LS_1 to 8 may condense and irradiate the light emitted from the LED light sources LED_1 to 8. A first lens part LS_1 may be disposed on a front surface of the first LED LED_1, and a third lens part LS_3 may be disposed on a front surface of the third LED LED_3. Each of the lens parts LS_1 to 8 may include a rod lens and a fly eye lens part. Since the configuration and operation of the lens part are described with reference to FIGS. 2 to 7b, a detailed description thereof will be omitted.

The motor 8400 may be connected with the light emitting unit 8200 (or the LED light sources LED_1 to 8) to move the light emitting unit 8200 (or the LED light sources LED_1 to 8), thereby controlling a light emission direction. For example, the motor 8400 may adjust the light emission direction of the light emitting unit 8200 (or the LED light sources LED_1 to 8) toward a front direction, a left direction, or a right direction. Alternatively, the motor 8400 may adjust the light emission direction of the light emitting unit 8200 (or the LED light sources LED_1 to 8) in a vertical direction.

The display 8500 may display outdoor scenery or a user-desired content or image. For example, the display 8500 may display a natural image such as a sky image or a forest image, scenery of a current position, or a user-desired specific image. Thus, the user may receive a further fresh feeling as if a real window is installed. The display 8500 may include a liquid crystal display (LCD) device for displaying an image, a light emitting diode (LED) display device, an organic LED (OLED) display device, or an active matrix OLED (AMOLED) display device. The display 8500 may be a touch-sensing-type display for receiving an input of the user.

The controller 8600 may control operations of the light emitting unit 8200, the motor 8400, and the display 8500.

The controller 8600 may adjust an intensity or an on/off state of at least one of the light sources LED_1 to 8 of the light emitting unit 8200 so that the light emitted from the lighting device 8000 has an intensity equal to or greater than the reference illuminance value. The reference illuminance value may be determined based on an intensity of light necessary for the user to produce the serotonin.

According to an embodiment, the reference illuminance value may be determined based on an illuminance value of a surrounding space, which is obtained through the illuminance sensor 8700. When the light having the intensity equal to or greater than the reference illuminance value and emitted from the lighting device 8000 is exposed to the user in addition to light originally existing in the surrounding space of the lighting device 8000 (e.g., light emitted from all sorts of artificial lightings except for the sun or the lighting device 8000), the user may experience dazzling or be exposed excessive ultraviolet light. For example, when the surrounding space of the lighting device 8000 is bright, or as the illuminance value of the surrounding space, which is obtained through the illuminance sensor 8700 increases, the reference illuminance value for determining the intensity of the light may decrease.

The controller 8600 may control the intensity or the on/off state of at least one of the light sources LED_1 to 8 so that the light emitted from the lighting device 8000 has a spectrum similar to that of the natural light. For example, the controller 8600 may adjust an intensity ratio of the eight LED light sources LED_1 to 8 into a specific ratio (a:b:c:d:e:f g:h) so that the entire light emitted from the lighting device 8000 has the spectrum similar to that of the natural light.

The controller 8600 may control whether at least one of the visible light, the ultraviolet light, and the infrared light is emitted. When the user does not want to receive the infrared light, the lighting device 8000 may not emit the infrared light by turning-off the infrared LED of the LED light sources LED_1 to 8. Alternatively, when the user does not want to receive the ultraviolet light, the lighting device 8000 may not emit the ultraviolet light by turning-off the ultraviolet LED of the LED light sources LED_1 to 8. Alternatively, when the user wants to receive only the infrared light, the lighting device 8000 may turn-on only the infrared LED and turn-off the visible-light LED and the ultraviolet LED of the LED light sources LED_1 to 8.

The controller 8600 may transmit image information to be displayed to the display 8500 or turn-on/off the display 8500.

The controller 8600 may adjust the light emission direction of the light emitting unit 8200 to a reference direction by controlling the motor 8400. The reference direction may be determined as time elapses or directly determined by the user. According to an embodiment, as the controller 8600 controls the motor 8400 based on current time information, the light may be irradiated in the reference direction Thus, the user may experience as if an incidence direction of light moves as time elapses.

The controller 8600 may control the motor 8400 to obtain the current time information and move the light emission direction of the light emitting unit 8200 as time elapses. According to an embodiment, the controller 8600 may control the motor 8400 to adjust the light emission direction of the light emitting unit 8200 to head a left side or a right side with respect to the front surface of the lighting device 8000.

The light emission direction may be adjusted to an upward direction or a downward direction in addition to the left and right directions. The controller 8600 may control the motor 8400 so that the light emission direction heads a relatively upper side when a solar altitude of current time is low and heads a relatively lower side when a solar altitude of current time is high. For example, the controller 8600 may express that the sun rises by controlling the motor 8400 so that the light emission direction of the light emitting unit 8200 gradually moves to the lower side as the current time heads from the morning to the noon and express that the sun sets by controlling the motor 8400 so that the light emission direction of the light emitting unit 8200 gradually moves to the upper side as the current time heads from the noon to the evening.

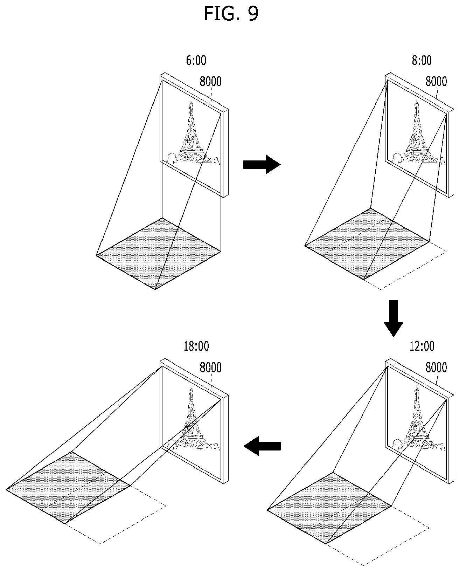

FIG. 9 is a view illustrating a state in which the light emission direction of the lighting device is changed as time elapses according to an embodiment.

Referring to FIG. 9, the controller 8600 may distinguish a specific space corresponding to sunrise time among surrounding spaces of an installed position of the lighting device 8000 (e.g., 6 o'clock in the morning). The specific space corresponding to sunrise time may be a left space with respect to the front surface of the lighting device 8000. The controller 8600 may control the motor 8400 so that the light emission direction of the light emitting unit 8200 heads a central space with respect to the front surface of the lighting device 8000 as time elapses (e.g., 8 o'clock in the morning). The controller 8600 may control the motor 8400 so that the light emission direction of the light emitting unit 8200 heads a right space with respect to the front surface of the lighting device 8000 at the noon (12:00) as time elapses. According to an embodiment, the controller 8600 may additionally control the motor 8400 so that the light emission direction gradually moves downward from the light emission direction at previous time. As time elapses, the controller 8600 may control the motor 8400 so that the light emission direction of the light emitting unit 8200 gradually moves to the right space from the afternoon to the evening (18:00). According to an embodiment, the controller 8600 may additionally control the motor 8400 so that the light emission direction gradually moves upward from the light emission direction at the noon.

The controller 8600 may turn-on or turn-off the light emitting unit 8200 at the reference time. For example, the controller 8600 may turn-on a power of the light emitting unit 8200 at the sunrise time and turn-off the power of the light emitting unit 8200 at the sunset time. Alternatively, the controller 8600 may turn-on or turn-off the light emitting unit 8200 at user-preset time (e.g., alarm time).

The lighting device 8000 may include the communication unit 8800. The communication unit 8800 may include a communication circuit for using a wired or wireless communication interface. The interface accessible by the communication unit 8800 may include Local Area Network (LAN), Wireless Local Area Network (WLAN) such as Wireless Fidelity (Wi-fi), Wireless Personal Area Network (WPAN) such as Bluetooth, Wireless Universal Serial Bus (USB), Zigbee, Near FieLED Communication (NFC), Radio-frequency identification (RFID), Power Line communication (PLC), or a modem communication interface that is accessible to a mobile cellular network such as 3rd Generation (3G), 4th Generation (4G), and Long Term Evolution (LTE). The Bluetooth interface may support Bluetooth Low Energy (BLE).

The lighting device 8000 may be connected to at least one external device through the communication unit 8800 and receive a control signal from the external device. For example, the external device may include a user's terminal such as a smartphone. The control signal may include whether at least one of the visible light, the ultraviolet light, and the infrared light is emitted, intensity information of at least one of the visible light, the ultraviolet light, and the infrared light, reference illuminance value information, color temperature information, current time information, date information, position information, weather information, light emission direction (reference direction) information, image information displayed on the display 8500, and information on start time and end time of light emission.

The controller 8600 may control the intensity or the on/off state of at least one of the light sources LED_1 to 8 or control the motor 8400 or the display 8500 based on the control signal. For example, the controller 8600 may expect a position and an altitude of the sun based on the time information, the weather information, and the position information to determine the light emission direction (reference direction). The controller 8600 may determine the reference color temperature based on the time information, the weather information, and the position information. The controller 8600 may directly receive user-desired light emission direction information and color temperature information and fix the light emission direction and the color temperature based on the received information instead of considering the time flow. The controller 8600 may directly receive the reference illuminance value from the user. Alternatively, the controller 8600 may determine the reference illuminance value based on surrounding illuminance values. The controller 8600 may control the on/off state of the ultraviolet LED and the infrared LED according to whether the ultraviolet light or the infrared light is emitted or control the intensity of the ultraviolet LED according to a user-desired emission quantity of the ultraviolet light. The controller 8600 may transmit image information to be displayed to the display 8500 based on the control signal. Alternatively, the controller 8600 may obtain surrounding image information corresponding to the current position information through the communication unit 8800 and transmit the surrounding image information to the display 8500.

The descriptions are intended to provide exemplary components and operations for implementing the present invention. The present invention may be embodied in different forms without being out of the scope, technical idea and essential features of the present invention. The detailed description may be amended or modified according to viewpoints and applications, not being out of the scope, technical idea and other objects of the present invention.

## Claims

1. A lighting device for providing light similar to natural light, comprising:
a plurality of LED light sources;
a plurality of lens parts respectively disposed on front surfaces of the plurality of LED light sources to collect and irradiate light emitted from each of the plurality of LED light sources; and
a controller configured to control an intensity or an on/off state of at least one of the plurality of LED light sources,
wherein the plurality of LED light sources comprise visible-light LEDs, at least one ultraviolet LED, and at least one infrared LED, and
the visible-light LEDs comprise at least one of a white LED, a red LED, a green LED, and a blue LED,
wherein each of the plurality of lens parts comprises:
a condensing lens disposed on the front surface of each of the plurality of LED light sources to decrease a divergence angle of light emitted from each of the plurality of LED light sources; and
a fly eye lens part disposed on a front surface of the condensing lens to stack the light on a light receiving surface so that a light quantity at the light receiving surface has a uniform distribution,
wherein the controller controls an intensity or an on/off state of at least one of the plurality of LED light sources so that a sum of an intensity of light emitted from the plurality of LED light sources is greater than a reference illuminance value, or the light emitted from the plurality of LED light sources has a reference color temperature, and
the condensing lens is designed so that an emission surface from which the light is emitted has a surface area greater than that of an incidence surface to which the light emitted from each of the plurality of LED light sources is incident.

2. The lighting device of claim 1, wherein the lighting device has a shape of a window installable to a wall, and
the light is emitted from an upper portion of an edge area or a bezel area of the window.

3. The lighting device of claim 1, wherein the fly eye lens part has a structure in which a first fly eye lens, a second fly eye lens, a third fly eye lens, and a fourth fly eye lens are sequentially stacked with each other,
the second fly eye lens is obtained by rotating the first fly eye lens by 90° in a direction of a first axis, the third fly eye lens is obtained by rotating the first fly eye lens by 180° in a direction of a second axis, the fourth fly eye lens is obtained by rotating the second fly eye lens by 180° in the direction of the second axis, and
the first axis and the second axis are perpendicular to each other.

4. The lighting device of claim 1, further comprising a motor configured to control a light emission direction of the plurality of LED light sources,
wherein the controller controls the motor to set the light emission direction as a reference direction, and
the reference direction is determined based on current time or determined by a user.

5. The lighting device of claim 1, further comprising an illuminance sensor configured to sense surrounding illuminance,
wherein the reference illuminance value is determined based on surrounding illuminance sensed through the illuminance sensor.

6. The lighting device of claim 1, further comprising a communication unit configured to receive a control signal from the outside,
wherein the controller controls an intensity or an on/off state of at least one of the plurality of LED light sources under the control signal, and
the control signal comprises the reference illuminance value, a light emission direction, a reference color temperature, current weather, current time, or an intensity or an on/off state of ultraviolet light.

7. The lighting device of claim 1, wherein the controller controls an intensity or an on/off state of the at least one infrared LED based on information on an intensity or an on/off state of infrared light received from the outside.

8. A lighting device for providing light similar to natural light, comprising:
a light emitting unit comprising a plurality of LED light sources and a plurality of lens parts disposed on front surfaces of the plurality of LED light sources to collect and irradiate light emitted from each of the plurality of LED light sources;
a controller configured to control an operation of the light emitting unit;
a communication unit configured to receive a control signal for controlling the controller;
a display configured to display external scenery or a user-desired image;
an illuminance sensor configured to sense surrounding illuminance; and
a motor configured to control a light emission direction of the light emitting unit,
wherein the plurality of LED light sources comprise visible-light LEDs, at least one ultraviolet LED, and at least one infrared LED, and
the visible-light LEDs comprise at least one of a white LED, a red LED, a green LED, and a blue LED,
wherein each of the plurality of lens parts comprises:
a condensing lens disposed on the front surface of each of the plurality of LED light sources to decrease a divergence angle of light emitted from each of the plurality of LED light sources; and
a fly eye lens part disposed on a front surface of the condensing lens to stack the light on a light receiving surface so that a light quantity at the light receiving surface has a uniform distribution,
wherein the controller controls an intensity or an on/off state of at least one of the plurality of LED light sources so that a sum of an intensity of light emitted from the plurality of LED light sources is greater than a reference illuminance value,
wherein the controller controls the motor to set the light emission direction as a reference direction,
the reference direction is determined based on current time or determined by a user, and
the reference illuminance value is determined based on surrounding illuminance sensed through the illuminance sensor.

9. The lighting device of claim 8, wherein the condensing lens is a rod lens in which an emission surface from which the light is emitted has a surface area greater than that of an incidence surface to which the light emitted from each of the plurality of LED light sources is incident, and
the fly eye lens part has a structure in which a plurality of fly eye lenses are stacked with each other.
